# EUROPÄISCHE PATENTSCHRIFT

(11) **EP 3 239 368 B1**
(45) Veröffentlichungstag und Bekanntmachung des Hinweises auf die Patenterteilung: **11.08.2021**
(21) Anmeldenummer: 17164898.3
(22) Anmeldetag: 05.04.2017
(51) Int. Cl.: D01G 7/06

(54) **VERFAHREN ZUR KALIBRIERUNG DER AUFLIEGEKRAFT EINES ABTRAGORGANS EINES BALLENÖFFNERS UND BALLENÖFFNER**
PROCESS FOR CALIBRATING THE LOADING FORCE OF A BREAKER ELEMENT OF A BALE OPENER AND THE BALE OPENER
PROCÉDÉ D'ÉTALONNAGE DE LA FORCE D'APPUI D'UN ORGANE DE PRÉLÈVEMENT D'UN BRISE-BALLES ET BRISE-BALLES

(30) Priorität: 15.04.2016 CH 4982016
(43) Veröffentlichungstag der Anmeldung: 01.11.2017
(73) Patentinhaber: Maschinenfabrik Rieter AG, 8406 Winterthur (CH)
(72) Erfinder: GSCHLIESSER, Gerhard, 8400 Winterthur (CH)

(56) Entgegenhaltungen:
- EP-A1- 2 322 701
- DE-A1- 4 110 074

## Beschreibung

### Technisches Gebiet

Die Erfindung bezieht sich auf ein Verfahren zur Kalibrierung der Aufliegekraft eines Abtragorgans eines Ballenöffners und Ballenöffner gemäss den unabhängigen Ansprüchen.

### Stand der Technik

Abtragorgane werden in sogenannten Ballenabtragmaschinen oder Ballenöffnern eingesetzt, um Fasern oder Faserflocken aus gepressten Faserballen heraus zu lösen. Dazu wird das Abtragorgan über die Faserballen hinweg bewegt.

Die Ballenabtragmaschine steht am Anfang von Verfahrenslinien in einer Spinnereivorbereitung (Putzerei) zur Verarbeitung von Fasergut, beispielsweise Baumwolle oder synthetische Fasern oder deren Mischungen, und hat einen entscheidenden Einfluss auf die Kontinuität der Abläufe innerhalb der Spinnereivorbereitung. In der Ballenabtragmaschine wird das in Ballen angelieferte Fasergut durch ein Abtragen von Faserflocken von den Ballen gelöst und in ein pneumatisches Transportsystem übergeben. Das pneumatische Transportsystem bringt die Faserflocken durch Rohrleitungen zu den nachfolgenden Reinigungsmaschinen. Das Abtragorgan ist an einem fahrbaren Abtragturm höhenverstellbar befestigt. Das Abtragorgan umfasst eine oder mehrere Abtragwalzen mit auf dessen Oberfläche angebrachten Zähnen, einen unterhalb der Abtragwalze angebrachtes Rückhalteelement und eine Absaughaube. Durch das Verfahren des Abtragorgans entlang den Faserballen greifen die Zähne in die Faserballen ein und reissen oder zupfen aufgrund der Rotation der Abtragwalze Fasern respektive Faserflocken aus dem Faserballen heraus. Die herausgerissenen Faserflocken werden durch die an eine Unterdruckquelle angeschlossene Absaughaube von der Abtragwalze übernommen und dem Transportsystem zugeführt.

DE4422574A1 offenbart beispielsweise ein Verfahren zum Abtragen von Fasernflocken von Textilfaserballen (z.B. Baumwolle) mittels eines auf die Faserballen absenkbaren und über die Ballen hin- und herfahrenden Abtragorgans, welches die Faserflocken aus der Ballenoberfläche herauslöst und einem Flockentransport übergibt, wobei die Ballenhöhe in mindestens drei Abtragzonen unterteilt ist. Um eine optimale Abarbeitung der Faserflocken zu ermöglichen, namentlich eine gleichmässige Produktionsmenge und eine gleichmässige Flockengrösse zu erzielen, wird die Fahrgeschwindigkeit des Wagens mit dem Abtrageorgan in Abhängigkeit von der Ballenhöhe geändert.

EP2322701A1 offenbart einen Ballenöffner, der in Abhängigkeit von Verfahrensbedingungen bei einer konstanten Kraft oder einer konstanten Höhe gefahren werden kann. Die Kontrolle geschieht automatisch in Abhängigkeit von Bedingungen des Abtrageorgans und des Verfahrenstyps. US7506410 offenbart einen Ballenöffner, welcher einen beweglichen Distanzsensor offenbart.

Die Aufliegekraft des Aufliegeorgans des Ballenöffners muss nun kontinuierlich gemessen werden. Tests und Messungen haben nun aber gezeigt, dass die Ermittlung der Aufliegekraft des Abtragorgans auf den Ballen sehr vielen Störeinflüssen unterliegt, wie z.B., dass die Hub- und Senkbewegungen das Signal verändern, abhängig davon, auf welcher Höhe das Abtragorgan momentan steht, Reibungen der Rollen, welche sich abnützen können, Vibrationen durch den Abtragprozess, Messungenauigkeiten selbst (Filter werden verwendet), etc. Diese Störeinflüsse summieren sich teils auf, so dass eine Messungenauigkeit von bis zu +/- 20 kg entsteht und teils sogar mehr. Soll nun z.B. eine Ballengruppe mit 20 kg Aufliegekraft abgetastet werden, führte das teils dazu, dass das Abtragorgan "in der Luft" war, anstatt in die Ballen zu greifen, da durch falsche Messwerte die Steuerung annahm, dass das Abtragorgan auf der Balle mit 20 kg aufliegt.

Bevor der eigentliche Abtastvorgang gestartet wird, wird das Abtragorgan deshalb langsam abgesenkt, bis es die eingestellte Aufliegekraft, z.B. Mittelwert aus einer oberen Aufliegekraft (d.h. Abtragorgan heben) und einer unteren Aufliegekraft (d.h. Abtragorgan senken) erreichte, und somit angenommen wurde, dass das Abtragorgan auf der Ballengruppe mit der eingestellten Aufliegekraft aufliegt. Dann wurde die Längsantrieb eingeschaltet, und das Abtragorgan wurde dermassen im Verhältnis der Aufliegekraft nach oben oder unten bewegt, so dass die Aufliegekraft zwischen dem maximalen und dem minimalen Aufliegekrafteinstellung lag. Dies führte aber zu oben genannten Problemen.

### Darstellung der Erfindung

Der Erfindung liegt somit die Aufgabe zugrunde, ein Verfahren und einen Ballenöffner zu schaffen, die die Nachteile, die im Stand der Technik vorhanden sind, vermeiden.

Der Erfindung liegt weiter die Aufgabe zugrunde, ein Verfahren und einen Ballenöffner zu schaffen, welche ein stabiles und zuverlässiges Abtasten der Ballengruppen ermöglichen.

Der Erfindung liegt weiter die Aufgabe zugrunde, ein Verfahren und einen Ballenöffner zu schaffen, welche trotz der vorhandenen Störeinflüsse zuverlässig die Aufliegekraft einstellt.

Der Erfindung liegt weiter die Aufgabe zugrunde, ein Verfahren und einen Ballenöffner zu schaffen, welche verhindern, dass der Ballenöffner durch eine zu tiefe Absenkung des Abtastorgans aus den Schienen gerissen wird.

Diese Aufgaben werden durch ein Verfahren mit den Verfahrensschritten gemäss dem unabhängigen Verfahrensanspruch und durch einen Ballenöffner mit den Merkmalen des unabhängigen Sachanspruchs gelöst.

Vorteilhafte Ausführungsformen der Erfindung sind Gegenstand der Unteransprüche.

Insbesondere werden diese Aufgaben durch ein Verfahren zur Kalibrierung der Aufliegekraft eines Abtragorgans eines Ballenöffners gelöst, umfassend folgende Verfahrensschritte:
(a) Vorgeben der oberen und unteren Aufliegekraft und Einstellen eines Kraftsensors auf null;
(b) Absenken des Abtragorgans auf die Ballengruppe bis mindestens das Doppelte einer oberen Aufliegekraft erreicht wird, bei welcher das Abtragorgan während des Abtragens den Befehl zum Heben erhält, wobei die Aufliegekraft mit dem Kraftsensor gemessen wird;
(c) Entlasten des Abtragorgans;
(d) Einstellen der mit dem Kraftsensor gemessenen Aufliegekraft auf einen negativen Wert, der Signalverfälschungeinflüsse einbezieht; und
(e) Absenken des Abtragorgans bis die Aufliegekraft mindestens die obere Aufliegekraft erreicht.

Diese Aufgaben werden auch durch einen Ballenöffner zur Durchführung des erfindungsgemässen Verfahrens gelöst, wobei der Ballenöffner folgender Merkmale enthält
- ein Abtragorgan mit einem Kraftsensor;
- Mittel zum Absenken und Anheben des Abtragorgans auf eine Ballengruppe;
- eine Steuerung, so dass eine Senkbewegung des Abtragorgans erfolgt, wenn eine untere Aufliegekraft erreicht ist, und eine Hubbewegung erfolgt, wenn die obere Aufliegekraft erreicht ist;
- Mittel zum Vorgeben einer oberen und unteren Aufliegekraft des Abtragorgans;
- Mittel zum Einstellen der mit dem Kraftsensor gemessenen Aufliegekraft des Abtragorgans; und
- Mittel zum Längsfahren des Abtragorgans entlang der Ballengruppe.

Vorteilhaft ist mittels dieses erfindungsgemässen Verfahrens ein stabiles, zuverlässiges Abtasten der Ballengruppen mittels Aufliegekraftmessung gewährleistet. Während des Längsfahrens des Abtragorgans entlang der Ballengruppe wird die Kraft mit dem kalibrierten Kraftsensor kontinuierlich gemessen und es erfolgt eine Senkbewegung des Abtragorgans, wenn eine untere Aufliegekraft erreicht wird, und eine nach oben gerichtet Hubbewegung erfolgt, wenn eine obere Aufliegekraft erreicht wird. Die obere und untere Aufliegekraft des Abtragorgans werden vom Benutzer vorgegeben werden und bestimmen so den nachfolgenden Abtragungsprozess.

Eine Entlastung des Abtragorgans kann vorteilhaft aus einem Anheben des Abtragorgans um einen vorbestimmten Betrag zur Entlastung des Abtragorgans und aus einem Absenken des Abtragorgans um einen vorbestimmten Betrag besteht, so dass das Abtragorgan immer noch entlastet bleibt. Es kann auch sowohl zwischen dem Anheben und dem Absenken als auch nach dem Absenken mindestens eine Sekunde gewartet werden und das Absenken kann in einer langsameren Geschwindigkeit als das Anheben geschehen. Auf diese Weise ist ein Entlasten sichergestellt, was ein zuverlässiges Einstellen der Aufliegekraft im nachfolgenden Verfahren gegeben.

Beim Absenken des Abtragorgans kann vorteilhaft das 1.25 bis 2fache der oberen Aufliegekraft erreicht werden. Mit dieser Ausführungsform wird erreicht, dass das Abtragorgan vor dem eigentlichen Abtragevorgang sicher auf der Ballengruppe aufliegt und mit einer guten Materialabtragung der Ballen startet.

Um einen Schadensfall zu vermeiden, können ein Drehmoment eines für die Hubbewegung verantwortlichen Motors und die Aufliegekraft gemessen werden. Die Senkbewegung wird dann gestoppt, wenn ein Maximalwert von einer der beiden Grössen überschritten wird. Alternativ kann zusätzlich eine minimale Höhe des Abtragorgans kontinuierlich berechnet und der Ballenöffner gestoppt werden, wenn die minimale Höhe erreicht wird. Diese Ausführungsform erlaubt einen sicheren Betrieb des Ballenöffners und verhindert eine zu tiefe Absenkung des Abtastorgans, so dass dieser aus den Schienen gerissen werden könnte.

Entsprechend einer vorteilhaften Ausführungsform kann die Längsposition des Abtragorgans entlang der Ballengruppe über fortlaufende Barcodes, die unten an der Ballengruppe angebracht sind, bestimmt werden. Für die Positionsbestimmung wird ein Barcode-Leser verwendet, welcher die Barcodes kontinuierlich scannt und einen absoluten Längenwert zurückgibt. Zu diesem Zweck wird immer eine Vielzahl von Barcodes gleichzeitig erfasst und mit dieser Information die Positionsbestimmung des Abtragorgans durchgeführt. Vorteilhaft ergibt diese Ausführungsform verbesserte Überwachungsmöglichkeiten des Ballenöffners.

Die Erfindung bezieht sich auch auf ein Computerprogrammprodukt, welches direkt in einen internen Speicher eines erfindungsgemässen Ballenöffners geladen werden kann und Softwarecodeabschnitte umfasst, mit denen die Verfahrensschritte des erfindungsgemässen Verfahrens ausgeführt werden, wenn das Produkt auf dem Ballenöffner läuft.

Weitere Vorteile der Erfindung sind anhand eines nachfolgend beschriebenen und gezeigten Ausführungsbeispiels zu entnehmen.

### Kurze Beschreibung der Figuren

Die Erfindung wird anhand der beigefügten Figuren näher erläutert, wobei
- **Fig. 1**: eine schematische Darstellung eines Ballenöffners zeigt; und
- **Fig. 2**: eine schematische Darstellung der am erfindungsgemässen Verfahren beteiligten Elemente;
darstellen. Es werden nur für die Erfindung wichtigen Merkmale dargestellt. Gleiche Bezugszeichen bezeichnen in unterschiedlichen Figuren gleiche Merkmale.

### Wege zur Ausführung der Erfindung

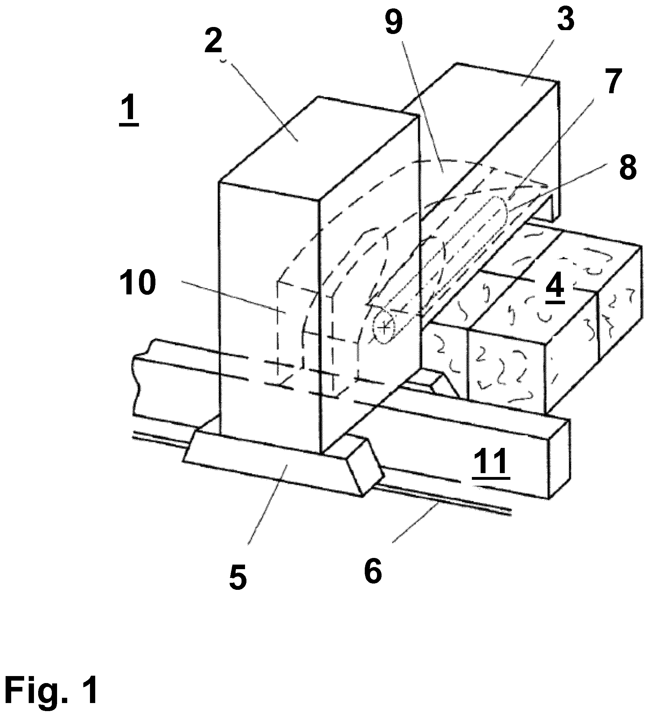

Figur 1 zeigt in einer schematischen Darstellung einen erfindungsgemässen Ballenöffner 1. Der Ballenöffner 1 besteht im Wesentlichen aus einem Abtragturm 2 und einem Abtragorgan 3. Das Abtragorgan 3 ist am Abtragturm 2 einseitig befestigt und frei auskragend über die Ballengruppe 4 angeordnet. Der Abtragturm 2 ist mit einem Fahrwerk 5 ausgerüstet. Mit Hilfe des Fahrwerks 5 wird der Abtragturm 2 auf Schienen 6 entlang der Ballengruppe 4 bewegt. Durch diese Bewegung wird das am Abtragturm 2 angebrachte Abtragorgan 3 über die Oberfläche der unter ihm liegenden Ballengruppe 2 geführt. Die Befestigung des Abtragorgans 3 am Abtragturm 2 ist höhenverstellbar ausgeführt, so dass die Ballengruppe 4 kontinuierlich abgetragen werden können. Im Abtragorgan 3 ist eine Abtragwalze 7 mit einer Achse 8 angeordnet. Die Abtragwalze 7 entnimmt aus der Ballengruppe 4 Faserflocken. Die Faserflocken werden über eine Absaughaube 9 mittels Unterdruck von der Abtragwalze 7 abgenommen und zum Abtragturm 2 geführt. Im Abtragturm 2 ist ein Transportkanal 10 angeordnet, welcher die Faserflocken von der Absaughaube 9 übernimmt und einem pneumatischen Faserflocken-Transportsystem 11 zuführt. Der Transportkanal 10 und damit auch die Absaughaube 9 stehen unter einem bestimmten Unterdruck, der zur pneumatischen Förderung der Faserflocken zum Transportkanal 10 dient.

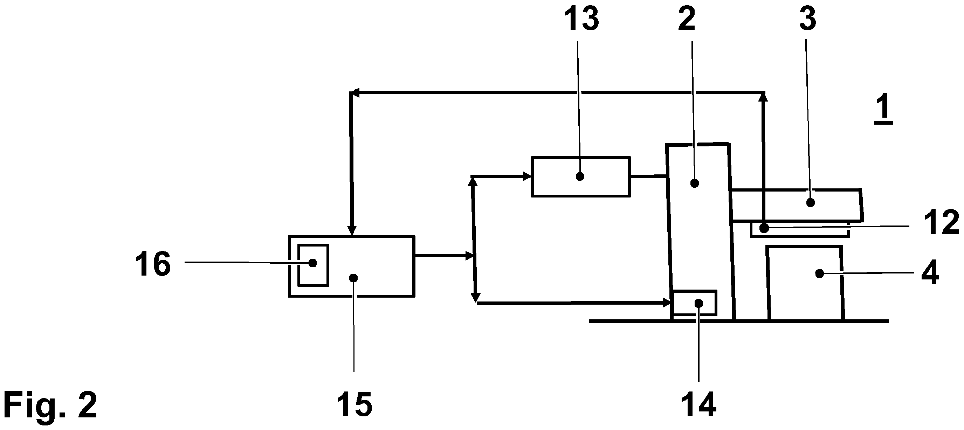

Fig. 2 zeigt eine schematische Darstellung der am erfindungsgemässen Verfahren beteiligten Elemente des Ballenöffners 1. Das Abtragorgan 3 ist mit einem Kraftsensor 12 ausgerüstet, der die von dem Organ 3 auf die Faserballen 4 ausgeübte Kraft misst. Der Kraftsensor ist beispielsweise eine Kraftmessdose oder ein anderer geeigneter Sensor, der die Aufliegekraft des Abtragorgans 3 misst. Das Abtragorgan 3 wird durch einen ersten Motor 13 angesteuert, so dass dieser das Abtragorgan 3 über die Ballengruppe anhebt oder absenkt. Mittels eines zweiten Motors 14 wird das Abtragorgan 3 entlang der Ballengruppe gefahren, um die Ballengruppe 4 abzutragen.

Erfindungsgemäss ist ein Verfahren zur Kalibrierung der Aufliegekraft eines Abtragorgans 3 eines Ballenöffners 1 auf einer Ballengruppe 4 offenbart. Dieses Verfahren wird vor dem eigentlichen Abtragvorgang der Ballengruppe 4 durchgeführt und dient zur Kalibrierung des Kraftsensors 12. Der so kalibrierte Kraftsensor 12 wird während des nachfolgenden Abtragens der Ballengruppe 4 zur Kraftmessung auf folgende Art und Weise verwendet. Während des Längsfahrens des Abtragorgans 3 entlang der Ballengruppe 4 wird die Kraft mit dem Kraftsensor 12 kontinuierlich gemessen und es erfolgt eine Senkbewegung des Abtragorgans 3, wenn eine untere Aufliegekraft erreicht wird, und eine nach oben gerichtet Hubbewegung erfolgt, wenn eine obere Aufliegekraft erreicht wird. Der Ballenöffner 1 sieht zu diesem Zweck eine Steuerung 15 mit einem internen Speicher 16 vor. Die Steuerung 15 erhält die vom Kraftsensor 12 gemessenen Signale, wertet diese aus und gibt einen entsprechenden Befehl an den ersten Motor 13 weiter, der für die Höhensteuerung des Abtragorgans 3 verantwortlich ist. Die Steuerung 15 führt somit in Abhängigkeit von der gemessenen Aufliegekraft die Senkbewegung und die Hubbewegung des Abtragorgans 3 aus. Gleichzeitig können sowohl die obere und untere Aufliegekraft des Abtragorgans 3 in der Steuerung 15 vom Benutzer vorgegeben werden, als auch die mit dem Kraftsensor 12 gemessenen Aufliegekraft des Abtragorgans 3 entsprechend dem erfindungsgemässen Verfahren eingestellt werden.

Das erfindungsgemässe Verfahren umfasst nun folgende Verfahrensschritte: In einem ersten Verfahrensschritt wird das Abtragorgan 3 entlastet und der Kraftsensor 12 wird auf null, also unbelastet, eingestellt. Dazu wird es über die Ballengruppe 4 gehoben. Danach wird das Abtragorgan 3 auf die Ballengruppe 4 abgesenkt, bis mindestens das Doppelte der oberen Aufliegekraft erreicht wird. Die wirkende Kraft wird dabei mit dem Kraftsensor 12 gemessen. Vorteilhaft kann bei diesem Verfahrensschritt eine Auflagekraft gewählt werden, die zwischen dem Dreifachen und dem Sechsfachen der oberen Aufliegekraft liegt, bei der während des Betriebs die nach oben gerichtete Hubbewegung erfolgt.

In einem zweiten Verfahrensschritt erfolgt eine Entlastung des Abtragorgans 3. Die Entlastung kann vorteilhaft aus einem Anheben des Abtragorgans 3 um einen vorbestimmten Betrag und aus einem nachfolgenden Absenken des Abtragorgans 3 bestehen. Der vorbestimmte Betrag wird so gewählt, dass das Abtragorgan 3 sicher entlastet wird und auch nach dem Absenken entlastet bleibt. Um eine Messunsicherheit und Schwankungen zu minimieren, wird sowohl zwischen dem Anheben und dem Absenken als auch nach dem Absenken mindestens eine Sekunde gewartet. Zusätzlich kann aus demselben Grund das Absenken in einer langsameren Geschwindigkeit als das Anheben geschehen.

In einem dritten Verfahrensschritt wird die mit dem Kraftsensor gemessene Aufliegekraft auf einen negativen Wert eingestellt. Versuche haben gezeigt, dass der negative Wert in einem Bereich zwischen 20 bis 50% der oberen Aufliegekraft liegt. Dies stellt sicher, dass Signalverfälschungeinflüsse berücksichtigt werden, da nachfolgende Verfahrensschritte die Kraftmessung wieder positiv beeinflussen können. Der negative Wert trägt dieser Verfälschung Rechnung.

Im vierten und letzten Verfahrensschritt wird das Abtragorgan 3 wieder abgesenkt, bis die Aufliegekraft mindestens die obere Aufliegekraft ist. Vorteilhaft kann das Abtragorgan 3 bei diesem Verfahrensschritt soweit abgesenkt werden, bis das 1.25 bis 2fache der oberen Aufliegekraft erreicht ist.

Vorteilhaft ist mittels dieses erfindungsgemässen Verfahrens ein stabiles, zuverlässiges Abtasten der Ballengruppen 4 mittels Aufliegekraftmessung gewährleistet. Danach wird das Abtragorgan entlang der Ballengruppe entlanggefahren und eine Senkbewegung des Abtragorgans erfolgt, wenn die untere Aufliegekraft erreicht wird, und eine nach oben gerichtete Hubbewegung erfolgt, wenn die obere Aufliegekraft erreicht wird.

In einer weiteren Ausführungsform wird zusätzlich die Absenkhöhe des Abtastorgans 3 überwacht. Würde das Abtragorgan 3 zu tief auf eine Ballengruppe 4 abgesenkt, kann das zur Folge haben, dass der Ballenöffner 1 aus den Schienen 6 gerissen wird. Aus diesem Grunde wird erfindungsgemäss folgende Überwachung(en) realisiert, die redundant wirken können, und somit den oben genannten Schadensfall verhindern. Es wird kontinuierlich die minimal erlaubten Höhen des Abtragorgans 3 unabhängig berechnet, d.h. je nach aktueller Längsposition und über welcher Ballengruppe 4 oder ausserhalb einer Ballengruppe 4 sich das Abtragorgan 3 befindet, wird die Höhe berechnet, unter welche das Abtragorgan 3 mittels Handfunktionen oder im Produktionsbetrieb nicht gesenkt werden darf. Wird nun die minimale Höhe für den Hubantrieb einen Fahrbefehl unterschritten, wird dies nicht erlaubt und/oder eine Senkbewegung wird gestoppt. Diese redundante unabhängige Überwachung verhindert, dass wenn Ablauffehler in der Steuerung 15 vorhanden sind, oder Steuerungs-Abläufe geändert werden, dass das Abtragorgan 3 nie zu tief abgesenkt wird, so dass der Ballenöffner 1 nicht aus den Schienen 6 gerissen wird. Redundant werden zudem das Drehmoment des ersten Motors 13 und die oben genannte Aufliegekraft auf einen Maximalwert hin überwacht, d.h. wenn der Maximalwert eines dieser Werte überschritten wird, wird eine Senkbewegung des Abtragorgans 3 ebenfalls gestoppt.

Entsprechend einer vorteilhaften Ausführungsform kann die Längsposition des Abtragorgans 3 entlang der Ballengruppe 4 über Barcodes bestimmt werden. Fortlaufende Barcodes, die unterschiedlich sind, sind an der Ballengruppe 4 etwa relativ nahe am Boden angebracht. Für die Positionsbestimmung wird ein Barcode-Leser verwendet, welcher die Barcodes kontinuierlich scannt und einen absoluten Längenwert zurückgibt. Zu diesem Zweck wird immer eine Vielzahl von Barcodes gleichzeitig erfasst und mit dieser Information die Positionsbestimmung des Abtragorgans 3 durchgeführt. Die Anfangs- und Endposition einer Ballengruppe 4 kann an der Steuerung 15 eingegeben werden. Vorteilhaft ergibt diese Ausführungsform verbesserte Überwachungsmöglichkeiten des Ballenöffners 1.

Die Erfindung bezieht sich auch auf ein Computerprogrammprodukt, welches direkt in den internen Speicher 16 eines Ballenöffners 1 geladen werden kann und Softwarecodeabschnitte umfasst, mit denen die Verfahrensschritte des erfindungsgemässen Verfahrens ausgeführt werden, wenn das Produkt auf dem Ballenöffner läuft.

### Bezugszeichenliste

- 1: Ballenöffner
- 2: Abtragturm
- 3: Abtragorgan
- 4: Ballengruppe
- 5: Fahrwerk
- 6: Schiene
- 7: Antragwalze
- 8: Achse
- 9: Absaughaube
- 10: Transportkanal
- 11: Transportsystem
- 12: Kraftsensor
- 13: Motor
- 14: Motor
- 15: Steuerung
- 16: Speicher

## Patentansprüche

1. Verfahren zur Kalibrierung der Aufliegekraft eines Abtragorgans (3) eines Ballenöffners (1) auf einer Ballengruppe (4), umfassend folgende Verfahrensschritte:
(a) Vorgeben der oberen und unteren Aufliegekraft und Einstellen eines Kraftsensors (12) auf unbelastet;
(b) Absenken des Abtragorgans (3) auf die Ballengruppe (4) bis mindestens das Doppelte der oberen Aufliegekraft erreicht wird, bei welcher das Abtragorgan (3) während des Abtragens den Befehl zum Heben erhält, wobei die Aufliegekraft mit dem Kraftsensor (12) gemessen wird;
(c) Entlasten des Abtragorgans (3);
(d) Einstellen der mit dem Kraftsensor (12) gemessenen Aufliegekraft auf einen negativen Wert, der Signalverfälschungseinflüsse einbezieht; und
(e) Absenken des Abtragorgans (3) bis die Aufliegekraft mindestens die obere Aufliegekraft erreicht.

2. Verfahren zur Kalibrierung der Aufliegekraft eines Abtragorgans (3) eines Ballenöffners (1) nach Anspruch 1, **gekennzeichnet, durch** folgenden Verfahrensschritt (g) Längsfahren des Abtragorgans (3) entlang der Ballengruppe (4), und eine Senkbewegung des Abtragorgans (3) erfolgt, wenn die untere Aufliegekraft erreicht wird, und eine nach oben gerichtete Hubbewegung erfolgt, wenn die obere Aufliegekraft erreicht wird.

3. Verfahren zur Kalibrierung der Aufliegekraft eines Abtragorgans (3) eines Ballenöffners (1) nach einem der Ansprüche 1 oder 2, **dadurch gekennzeichnet, dass** der Schritt (c) aus einem Anheben des Abtragorgans (3) um einen vorbestimmten Betrag zur Entlastung des Abtragorgans (3) und aus einem Absenken des Abtragorgans (3) um einen vorbestimmten Betrag besteht, so dass das Abtragorgan (3) immer noch entlastet bleibt.

4. Verfahren zur Kalibrierung der Aufliegekraft eines Abtragorgans (3) eines Ballenöffners nach Anspruch 3, **dadurch gekennzeichnet, dass** sowohl zwischen dem Anheben und dem Absenken als auch nach dem Absenken mindestens eine Sekunde gewartet wird und dass das Absenken in einer langsameren Geschwindigkeit als das Anheben geschieht.

5. Verfahren zur Kalibrierung der Aufliegekraft eines Abtragorgans (3) eines Ballenöffners (1) nach einem der Ansprüche 1 bis 4, **dadurch gekennzeichnet, dass** im Verfahrensschritt (e) das Abtragorgan (3) soweit abgesenkt wird, bis das 1.25 bis 2fache der oberen Aufliegekraft erreicht ist.

6. Verfahren zur Kalibrierung der Aufliegekraft eines Abtragorgans (3) eines Ballenöffners (1) nach einem der Ansprüche 1 bis 5, **dadurch gekennzeichnet, dass** eine minimale Höhe des Abtragorgans (3) kontinuierlich berechnet wird und der Ballenöffner (1) gestoppt wird, wenn die minimale Höhe erreicht wird.

7. Verfahren zur Kalibrierung der Aufliegekraft eines Abtragorgans (3) eines Ballenöffners (1) nach einem der Ansprüche 1 bis 6, **dadurch gekennzeichnet, dass** Drehmoment eines für die Hubbewegung verantwortlichen Motors (13) und die Aufliegekraft gemessen werden und die Senkbewegung gestoppt wird, wenn ein Maximalwert von einer der beiden Grössen überschritten wird.

8. Verfahren zur Kalibrierung der Aufliegekraft eines Abtragorgans (3) eines Ballenöffners (1) nach einem der Ansprüche 1 bis 7, **dadurch gekennzeichnet, dass** die Längsposition des Abtragorgans (3) über das Ablesen von an der Ballengruppe (4) angebrachten Barcodes bestimmt wird.

9. Ballenöffner (1) zur Durchführung eines Verfahrens nach einem der Ansprüche 1 bis 8, **dadurch gekennzeichnet, dass** der Ballenöffner folgender Merkmale enthält
• ein Abtragorgan (3) mit einem Kraftsensor (12);
• Mittel (13) zum Absenken und Anheben des Abtragorgans auf eine Ballengruppe;
• eine Steuerung (15), so dass eine Senkbewegung des Abtragorgans erfolgt, wenn eine untere Aufliegekraft erreicht ist, und eine Hubbewegung erfolgt, wenn die obere Aufliegekraft erreicht ist;
• Mittel (15) zum Vorgeben einer oberen und unteren Aufliegekraft des Abtragorgans (3);
• Mittel (15) zur Durchführung der Verfahrensschritte gemäss einem der Ansprüche 1 bis 8 zum Einstellen der mit dem Kraftsensor gemessenen Aufliegekraft des Abtragorgans; und
• Mittel (14) zum Längsfahren des Abtragorgans entlang der Ballengruppe (4).

10. Ballenöffner (1) nach Anspruch 9, **dadurch gekennzeichnet, dass** Mittel zur kontinuierlichen Berechnung der minimalen Höhe des Abtragorgans (3) vorhanden sind, wobei der Ballenöffner (1) gestoppt wird, wenn die minimale Höhe erreicht ist.

11. Ballenöffner (1) nach einem der Ansprüche 9 bis 10, **dadurch gekennzeichnet, dass** Mittel (15) zur Überwachung des Drehmomentes eines Motors (13) und der Aufliegekraft vorhanden sind und eine Senkbewegung des Abtragorgans (3) gestoppt wird, wenn ein Maximalwert von einer der beiden Grössen überschritten ist.

12. Computerprogrammprodukt, **dadurch gekennzeichnet, dass** es direkt in einen internen Speicher (16) eines Ballenöffners (1) gemäß einem der Ansprüche 9 bis 11 geladen werden kann und Softwarecodeabschnitte umfasst, mit denen die Verfahrensschritte gemäss einem der Ansprüche 1 bis 8 ausgeführt werden, wenn das Produkt auf dem Ballenöffner (1) läuft.

## Claims

1. A process for calibrating the loading force of a breaker element (3) of a bale opener (1) on a bale group (4) comprising the following process steps:
(a) Predefine upper and lower loading forces and setting a force sensor (12) at no load;
(b) Lowering the breaker element (3) onto the bale group (4) until achieving a loading force equal to at least twice the upper loading force at which the breaker element (3) receives the command to lift during the breaking operation wherein the loading force is measured with the force sensor (12);
(c) Relieving the load on the breaker element (3);
(d) Setting the loading force measured with the force sensor (12) at a negative value which includes signal distortion influences and
(e) Lowering the breaker element (3) until the loading force reaches at least the level of the upper loading force.

2. The process for calibrating the loading force of a breaker element (3) of a bale opener (1) according to claim 1, **characterized by** the following process step:
(g) longitudinal travel of the breaker element (3) along the bale group (4) and a lowering movement of the breaker element (3) when the lower loading force is reached and there is an upward lifting movement when the upper loading force is reached.

3. The process for calibrating the loading force of a breaker element (3) of a bale opener (1) according to any one of claims 1 or 2, **characterized in that** step (c) consists of raising the breaker element (3) by a predetermined amount to reduce the load on the breaker element (3) and lowering the breaker element (3) by a predetermined amount, so that the breaker element (3) still remains at no load.

4. The process for calibrating the loading force of a breaker element (3) of a bale opener according to claim 3, **characterized in that** a pause of one second is observed between the raising and the lowering of the breaker element and also after the lowering of the breaker element, and the lowering takes place at a slower rate than the raising.

5. The process for calibrating the loading force of a breaker element (3) of a bale opener (1) according to any one of claims 1 to 4, **characterized in that**, in the process step (e), the breaker element (3) is lowered until the upper loading force has reached a level 1.25 to 2 times higher.

6. The process for calibrating the loading force of a breaker element (3) of a bale opener (1) according to any one of claims 1 to 5, **characterized in that** a minimum height of the breaker element (3) is calculated continuously, and the bale opener (1) is stopped when the minimum height is reached.

7. The process for calibrating the loading force of a breaker element (3) of a bale opener (1) according to any one of claims 1 to 6, **characterized in that** the torque of a motor (13) responsible for the lifting movement and the loading force are measured and the lowering movement is stopped when a maximum value is exceeded by one of the two variables.

8. The process for calibrating the loading force of a breaker element (3) of a bale opener (1) according to any one of claims 1 to 7, **characterized in that** the longitudinal position of the breaker element (3) is determined by reading barcodes provided on the bale group (4).

9. A bale opener (1) for carrying out a process according to any one of claims 1 to 8, **characterized in that** the bale opener has the following features:
• a breaker element (3) with a force sensor (12);
• means (13) for raising and lowering the breaker element onto and off of a bale group;
• a controller (15), so that there is a lowering movement of the breaker element when the lower loading force is reached, and there is a lifting movement when the upper loading force is reached;
• means (15) for predefining an upper and a lower loading force of the breaker element (3);
• means (15) for carrying out the process steps according to any one of claims 1 to 8 for setting the loading force of the breaker element measured with the force sensor and
• means (14) for longitudinal movement of the breaker element along the bale group (4).

10. The bale opener (1) according to claim 9, **characterized in that** means for continuous calculation of the minimum height of the breaker element (3) are present, wherein the bale opener (1) is stopped when the minimum height has been reached.

11. The bale opener (1) according to claims 9 to 10, **characterized in that** means (15) for monitoring the torque of a motor (13) and the loading force are present, and a lowering movement of the breaker element (3) is stopped when a maximum value is exceeded by one of the two variables.

12. A computer program product, **characterized in that** it can be loaded directly into an internal memory (16) of a bale opener (1) according to any one of claims 9 to 11 and comprises software code segments, with which the process steps according to any one of claims 1 to 8 are carried out when the product is running on the bale opener (1).

## Revendications

1. Procédé destiné à calibrer la force d'appui d'un organe de prélèvement (3) d'un ouvre-balles (1) sur un groupe de balles (4), comprenant les étapes de procédé suivantes :
(a) spécification des forces d'appui supérieure et inférieure et réglage d'un capteur de force (12) sur déchargé ;
(b) abaissement de l'organe de prélèvement (3) sur le groupe de balles (4) jusqu'à ce qu'au moins le double de la force d'appui supérieure soit atteint, l'organe de prélèvement (3) recevant alors l'ordre de lever pendant le prélèvement, la force d'appui étant mesurée avec le capteur de force (12) ;
(c) décharge de l'organe de prélèvement (3) ;
(d) réglage de la force d'appui mesurée avec le capteur de force (12) à une valeur négative qui inclut des influences de falsification de signal ; et
(e) abaissement de l'organe de prélèvement (3) jusqu'à ce que la force d'appui atteigne au moins la force d'appui supérieure.

2. Procédé destiné à calibrer la force d'appui d'un organe de prélèvement (3) d'un ouvre-balles (1) selon la revendication 1, **caractérisé par** l'étape de procédé suivante
(g) déplacement longitudinal de l'organe de prélèvement (3) le long du groupe de balles (4), et un mouvement d'abaissement de l'organe de prélèvement (3) se produit lorsque la force d'appui inférieure est atteinte, et un mouvement de levage vers le haut se produit lorsque la force d'appui supérieure est atteinte.

3. Procédé destiné à calibrer la force d'appui d'un organe de prélèvement (3) d'un ouvre-balles (1) selon l'une des revendications 1 ou 2, **caractérisé en ce que** l'étape (c) consiste à soulever l'organe de prélèvement (3) d'une mesure prédéterminée jusqu'à la décharge de l'organe de prélèvement (3) et consiste à abaisser l'organe de prélèvement (3) d'une mesure prédéterminée, de sorte que l'organe de prélèvement (3) reste toujours déchargé.

4. Procédé destiné à calibrer la force d'appui d'un organe de prélèvement (3) d'un ouvre-balles selon la revendication 3, **caractérisé en ce qu'**une période d'attente d'au moins une seconde existe entre le soulèvement et l'abaissement ainsi qu'après l'abaissement et **en ce que** l'abaissement a lieu à une vitesse plus lente que celle du soulèvement.

5. Procédé destiné à calibrer la force d'appui d'un organe de prélèvement (3) d'un ouvre-balles (1) selon l'une des revendications 1 à 4, **caractérisé en ce que**, à l'étape de procédé (e), l'organe de prélèvement (3) est abaissé jusqu'à ce que la force d'appui supérieure soit atteinte de 1,25 à 2 fois.

6. Procédé destiné à calibrer la force d'appui d'un organe de prélèvement (3) d'un ouvre-balles (1) selon l'une des revendications 1 à 5, **caractérisé en ce qu'**une hauteur minimale de l'organe de prélèvement (3) est calculée en continu et l'ouvre-balles (1) est arrêté lorsque la hauteur minimale est atteinte.

7. Procédé destiné à calibrer la force d'appui d'un organe de prélèvement (3) d'un ouvre-balles (1) selon l'une des revendications 1 à 6, **caractérisé en ce qu'**un couple d'un moteur (13) responsable du mouvement de levage et la force d'appui sont mesurés et le mouvement d'abaissement est arrêté lorsqu'une valeur maximale de l'un des deux paramètres est dépassée.

8. Procédé destiné à calibrer la force d'appui d'un organe de prélèvement (3) d'un ouvre-balles (1) selon l'une des revendications 1 à 7, **caractérisé en ce que** la position longitudinale de l'organe de prélèvement (3) est déterminée par lecture de codes-barres apposés sur le groupe de balles (4).

9. Ouvre-balles (1) destiné à mettre en œuvre un procédé selon l'une des revendications 1 à 8, **caractérisé en ce que** l'ouvre-balles présente les caractéristiques suivantes
• un organe de prélèvement (3) comportant un capteur de force (12) ;
• des moyens (13) destinés à abaisser et à soulever l'organe de prélèvement sur un groupe de balles ;
• une commande (15) pour qu'un mouvement d'abaissement de l'organe de prélèvement ait lieu lorsqu'une force d'appui inférieure est atteinte et pour qu'un mouvement de levage ait lieu lorsque la force d'appui supérieure est atteinte ;
• des moyens (15) destinés à spécifier des forces d'appui supérieure et inférieure de l'organe de prélèvement (3) ;
• des moyens (15) destinés à mettre en œuvre les étapes de procédé selon l'une des revendications 1 à 8 pour régler la force d'appui de l'organe de prélèvement mesurée avec le capteur de force ; et
• des moyens (14) destinés à déplacer l'organe de prélèvement longitudinalement le long du groupe de balles (4).

10. Ouvre-balles (1) selon la revendication 9, **caractérisé en ce qu'**il existe des moyens destinés à calculer en continu la hauteur minimale de l'organe de prélèvement (3), l'ouvre-balles (1) étant arrêté lorsque la hauteur minimale est atteinte.

11. Ouvre-balles (1) selon l'une des revendications 9 à 10, **caractérisé en ce que** des moyens (15) destinés à surveiller le couple d'un moteur (13) et la force d'appui sont présents et un mouvement d'abaissement de l'organe de prélèvement (3) est arrêté lorsqu'une valeur maximale de l'un des deux paramètres est dépassée.

12. Produit programme informatique, **caractérisé en ce qu'**il peut être chargé directement dans une mémoire interne (16) d'un ouvre-balles (1) selon l'une des revendications 9 à 11 et comprend des parties de code logiciel avec lesquelles les étapes de procédé selon l'une des revendications 1 à 8 sont exécutées lorsque le produit défile sur l'ouvre-balles (1).
